# EUROPEAN PATENT SPECIFICATION

(11) **EP 2 831 575 B1**
(45) Date of publication and mention of the grant of the patent: **06.05.2020**
(21) Application number: 13721087.8
(22) Date of filing: 21.03.2013
(51) Int. Cl.: G01N 30/86, G06K 9/00, H01J 49/00

(54) **METHOD AND SYSTEM FOR FILTERING GAS CHROMATOGRAPHY-MASS SPECTROMETRY DATA**
VERFAHREN UND SYSTEM ZUR FILTERUNG VON GASCHROMATOGRAFIE-MASSENSPEKTROMETRIEDATEN
PROCÉDÉ ET SYSTÈME DE FILTRAGE DE DONNÉES DE CHROMATOGRAPHIE EN PHASE GAZEUSE-SPECTROMÉTRIE DE MASSE

(30) Priority: 29.03.2012 US 201261617118 P
(43) Date of publication of application: 04.02.2015
(73) Proprietor: Koninklijke Philips N.V., 5656 AG Eindhoven (NL)
(72) Inventor: NIJSEN, Tamara Mathea Elisabeth, NL-5656 AE Eindhoven (NL); D'ANGELO, Marina, NL-5656 AE Eindhoven (NL)
(74) Representative: Philips Intellectual Property & Standards
(86) International application number: PCT/IB2013/052242
(87) International publication number: WO 2013/144790

(56) References cited:
- EP-A1- 2 302 372
- US-A1- 2008 128 607
- US-B2- 8 017 908
- SANDRA CASTILLO ET AL: "Algorithms and tools for the preprocessing of LC MS metabolomics data", CHEMOMETRICS AND INTELLIGENT LABORATORY SYSTEMS, ELSEVIER SCIENCE PUBLISHERS B.V. AMSTERDAM, NL, vol. 108, no. 1, 18 March 2011 (2011-03-18), pages 23-32, XP028236233, ISSN: 0169-7439, DOI: 10.1016/J.CHEMOLAB.2011.03.010 [retrieved on 2011-03-24]
- PLUSKAL TOMÁS ET AL: "MZmine 2: Modular framework for processing, visualizing, and analyzing mass spectrometry-based molecular profile data", BMC BIOINFORMATICS, BIOMED CENTRAL, LONDON, GB, vol. 11, no. 1, 23 July 2010 (2010-07-23), page 395, XP021071722, ISSN: 1471-2105, DOI: 10.1186/1471-2105-11-395

## Description

### FIELD OF THE INVENTION

The present invention relates to a method of and a system for filtering at least a part of gas chromatography-mass spectrometry data. More specifically, the present invention relates to a method of and a system for filtering at least a part of gas chromatography-mass spectrometry data, wherein gas chromatography data comprising data representing one or more gas chromatography elution peaks obtained for at least one sample is provided.

### BACKGROUND OF THE INVENTION

Gas chromatography-mass spectrometry (forth denoted GC-MS) is a well-known method of substance identification that combines the features of gas-liquid chromatography and mass spectrometry to identify different substances within a test sample. GC-MS is generally widely used and has many applications for substance identification and e.g. comparison between multiple samples.

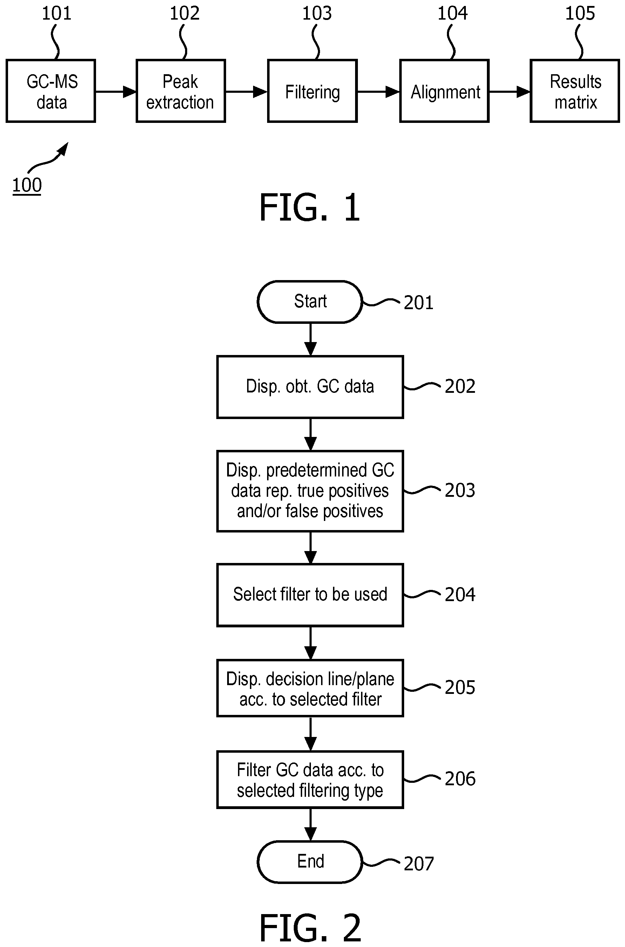

A GC-MS system or method typically produces a complex 3D dataset. The processing steps of the GC-MS data may e.g. be divided into four steps as shown in Figure 1. Shown is an initial step 101 where the raw GC-MS data (typically also referred to as GC-MS signature) of one or more samples is obtained or provided followed by a next step 102 where peak extraction is carried out extracting elution peaks from the chromatography data according to well-known methods resulting in a list or other data representation comprising one or more elution peaks where each elution peak represents a single compound e.g. together with its particular characteristics, such as retention time, area, and/or mass spectrum. At step 103, filtering may be carried out on the extracted elution peaks. At step 104, so-called alignment is carried out that aligns components in multiple samples using mass spectra data so it is assured that the same compound is identified as such in each sample, no matter their retention time. This is due to that no two chromatographic measurements never or extremely rarely are exactly the same even for the same sample or compound since the given compound may elute a slightly different retention time at every measurement over several samples in the gas chromatography process. After alignment, the result of the GC-MS is available at step 105.

Analysis of exhaled breath is an area of growing interest and use e.g. for use within the health and disease area. Using breath e.g. as a biological sample is appealing since breath-collection is relatively cheap, easy to perform, and non-invasive. GC-MS may be used to analyse exhaled breath. Other examples of usable chemical analytical methods for analysis of exhaled breaths are e.g. Time Of Flight Mass Spectrometry (TOF-MS) and Ion-Mobility Spectrometry (IMS).

For instance, so-called Volatile Organic Compounds (VOCs) are excreted from the skin, urine, feces, and most notably via exhaled breath. Besides pulmonary origin, VOCs also originate from the blood, reflecting any physiological, pathological or pathogen related biochemical processes throughout the body. Therefore, exhaled breath analysis may allow metabolic fingerprinting of disease processes anywhere inside the body. Exhaled breath analysis may also be used for other things than for metabolic fingerprinting of disease processes.

However, analysis of GC-MS data for a complex mixture such as breath is not evident or straightforward. Furthermore, when analysing exhaled breath every sample typically contain a few hundred peaks or so, giving a need for a fast alignment method. Additionally, known peak extraction methods are very sensitive, which of course is good but it therefore may also derive many 'false' peaks that do not really relate to a component.

Current commercially available software tools for GC-MS analysis are not generally designed for complex mixtures e.g. of the complexity of exhaled breath and furthermore it is not generally transparent to the user how the data is processed. Furthermore, at least some current commercially available software tools for GC-MS analysis apply filtering to the extracted peaks to improve the alignment step but this is most often done in a somewhat crude way simply by applying a threshold causing the physical meaning of this filtering to be unclear. In some tools, the filtering is not described or accounted for at all and a user simply does not know what happened to the data thereby reducing to quality of the data analysis.

Patent application US 2006/0125826 discloses systems and methods for correlating and displaying data produced by GC and MS. Filters for filtering displayed data e.g. like Extracted Ion Filter, Extracted Spectrum Filter, and a Search Engine Filter is disclosed where the Search Engine Filter is used to narrow down the list of matching spectra returned by the search engine.

US 8,017,908 B2 pertains to filtering data produced by for example GC systems. Data representing peaks are subjected to a detection threshold which can be obtained by a subjective or objective means. Subjective means include for example drawing a line that is close to the maximum of observed noise. Preferred are objective means which may use histograms as graphical method for determining the standard deviation of the distributions of intensities.

US 2008/0128607 A1 pertains to the analysis of a sample by inter alia gas chromatography. The number of peaks to be analyzed are reduced by comparing the data to a standard such as stored reference spectra, removing invalid peaks, and producing a graphics display of all results.

### SUMMARY OF THE INVENTION

It would be advantageous to provide a reliable aligned peak list or other suitable data structure that can be used for component identification and comparison between multiple samples. It would also be desirable to enable a reduction of the data to be processed. In general, the invention preferably seeks to mitigate, alleviate or eliminate one or more of the above mentioned disadvantages singly or in any combination. In particular, it may be seen as an object of the present invention to provide a method that solves one or more of the above mentioned problems, and/or other problems, of the prior art at least to an extent.

To better address one or more of these concerns, in a first aspect of the invention a method of filtering at least a part of spectrometry GC-MS data is presented that comprise providing gas chromatography-mass spectrometry data for a gas mixture comprising data representing one or more gas chromatography elution peaks obtained for at least one sample, wherein the gas mixture comprises exhaled breath, and filtering the gas chromatography-mass spectrometry data to reduce the amount of data, wherein the filtering comprises taking into account predetermined data representing one or more elution peaks previously determined to be false positives and/or predetermined data representing one or more elution peaks previously determined to be true positives. The predetermined data representing one or more elution peaks previously determined to be false positives and/or predetermined data representing one or more elution peaks previously determined to be true positives are stored data that were determined on the basis of an earlier analysis for gas mixtures simpler than the gas mixture for which said data representing one or more gas chromatography elution peaks obtained for at least one sample are provided. The method further comprises displaying on a display, a representation of a decision line or plane, the decision line or plane illustrating a linear or non-linear boundary of the gas chromatography-mass spectrometry data between what is kept and what is removed after filtering, and registering a selection made by a user of a filtering method and presenting to the user the decision line or plane associated with the selected filtering method.

In this way, unreliable elution peaks are removed in an expedient manner reducing the amount of data e.g. used for a later alignment process speeding up the processing time and also improving the data quality. A user may readily see what effect a given filtering method actually will have on the GC-MS data making the data-processing or filtering transparent to the user and further supporting sensible choice of which filtering method to apply.

In one embodiment, the method comprises displaying the gas chromatography-mass spectrometry data on a display together with the predetermined data representing one or more elution peaks previously determined to be false positives and/or the predetermined data representing one or more elution peaks previously determined to be true positives.

In this way, a user may readily be presented with a visual representation of the GC-MS data together with predetermined true and false positives allowing for sensible choice of which filtering method to apply.

In one embodiment, the filtering of the gas chromatography-mass spectrometry data comprises a filtering method selected from the group consisting of:
- filtering the gas chromatography-mass spectrometry data removing data with the condition that all true positives and data associated with the true positives are left after filtering;
- filtering the gas chromatography-mass spectrometry data removing data with the condition that all false positives and data associated with the false positives are removed;
- filtering the gas chromatography-mass spectrometry data using at least two threshold values, each being for a preselected parameter, selected by a user where the filtering discards the gas chromatography-mass spectrometry data being below each threshold value for each associated parameter;
- filtering the gas chromatography-mass spectrometry data based on statistical or mathematical analysis;
- filtering the gas chromatography-mass spectrometry data based on linear discriminant analysis for two or more classes where the predetermined data representing one or more elution peaks previously determined to be false positives belongs to one predetermined class and/or the predetermined data representing one or more elution peaks previously determined to be true positives belongs to a different predetermined class; and
- filtering the gas chromatography-mass spectrometry data based on non-linear statistical analysis for two or more classes where the predetermined data representing one or more elution peaks previously determined to be false positives belongs to one predetermined class and/or the predetermined data representing one or more elution peaks previously determined to be true positives belongs to a different predetermined class.

In this way, one or more efficient filtering method is/are provided suiting a given or different needs.

In one embodiment, the gas mixture comprises exhaled breath.

According to another aspect, the invention also relates to a system for filtering at least a part of gas chromatography-mass spectrometry data, the system comprising: a processing unit programmed to filter gas chromatography-mass spectrometry data for a gas mixture to reduce the amount of data, wherein the gas mixture comprises exhaled breath, the gas chromatography-mass spectrometry data comprising data representing one or more gas chromatography elution peaks obtained for at least one sample, wherein the filtering comprises taking into account predetermined data representing one or more elution peaks previously determined to be false positives and/or predetermined data representing one or more elution peaks previously determined to be true positives. The predetermined data representing one or more elution peaks previously determined to be false positives and/or predetermined data representing one or more elution peaks previously determined to be true positives are stored data that were determined on the basis of an earlier analysis for gas mixtures simpler than the gas mixture for which said data representing one or more gas chromatography elution peaks obtained for at least one sample are provided. The system is further adapted to display on a display, a representation of a decision line or plane, the decision line or plane illustrating a linear or non-linear boundary of the gas chromtography-mass spectrography data between what is kept and what is removed after filtering, and to register a selection made by a user of a filtering method and present to the user the decision line or plane associated with the selected filtering method.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 schematically illustrates a processing method for GC-MS data;
FIG. 2 schematically illustrates one embodiment of a method of filtering at least a part of GC-MS data;
FIGS. 3a - 3d schematically illustrate an exemplary user interface of one embodiment of the method of filtering at least a part of GC-MS data with different filters selected and their corresponding decision lines illustrated;
FIG. 4 schematically illustrates the exemplary user interface of FIGS. 3a - 3d showing a 3D representation of the GC-MS data;
FIG. 5 schematically illustrates the user interface of FIGS. 3a - 3d and 4 displaying GC-MS data according to different parameters than in FIGS. 3a - 3d and 4;
FIG. 6 schematically illustrates the user interface of FIGS. 3a - 3d, 4 and 5 displaying GC-MS data according to other different parameters;
FIG. 7 schematically illustrates one embodiment of a system for filtering at least a part of GC-MS data.

### DESCRIPTION OF EMBODIMENTS

An embodiment of the invention is illustrated in FIG 2 schematically illustrates one embodiment of a method of filtering at least a part of GC-MS data.

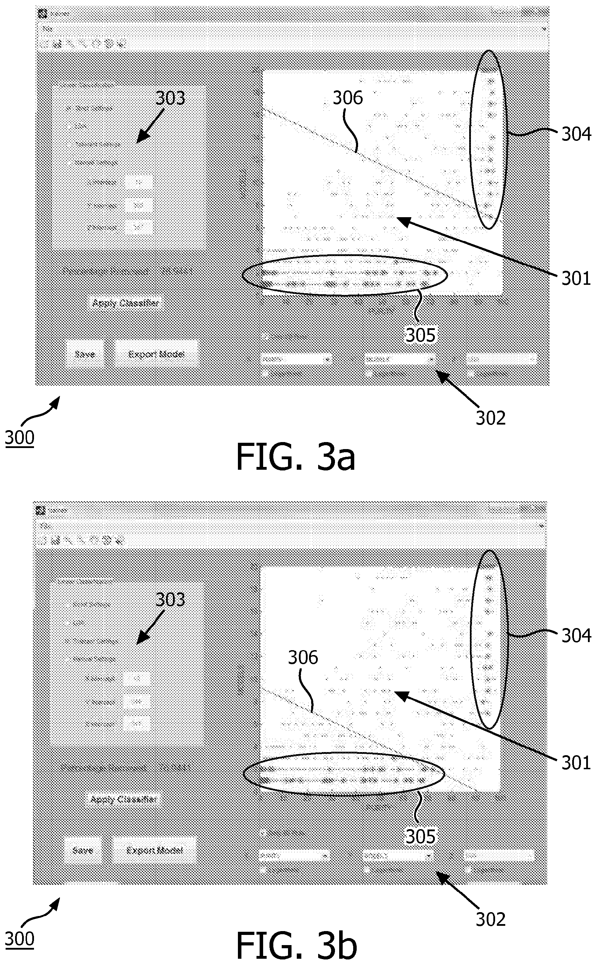

The method starts or initiates at step 201 and proceeds to step 202 where obtained GC-MS data in the form of extracted elution peaks is displayed (e.g. together with additional information) to a user on a suitable display in either 2D or 3D, e.g. as illustrated by 301 in FIGS. 3a - 3d, and 4 - 6, or in any other suitable way. The GC-MS data may be obtained for a given sample in any suitable way using a GC-MS system. The sample may e.g. be exhaled breath but can also be any other gas or gas mixture being analysed in a GC-MS system.

At step 203, predetermined data representing one or more elution peaks previously determined to be false positives and/or predetermined data representing one or elution peaks previously determined to be true positives is provided and displayed together with the GC-MS data.

The predetermined data representing one or more elution peaks previously determined to be false positives and/or predetermined data representing one or elution peaks previously determined to be true positives may e.g. be stored in a data library or other suitable way. The data for false positives and/or true positives may e.g. have been determined based on earlier analysis for simpler gas mixtures, and then stored for later use.

As one example, FIGS. 3a - 3d, and 4 - 6 illustrate different ways of displaying the GC-MS data together with the false positives and true positives (301, 305, and 304, respectively).

It is to be understood that step 202 and 203 may be carried out as a single step.

At step 204, a method of filtering is selected by the user, e.g. among a plurality of available filtering methods. After the user has selected a filtering method, a linear or non-linear decision line or plane (depending on whether the data is displayed in 2D or 3D) is displayed together with the GC-MS data and the false positives and true positives. The decision line or plane illustrate a boundary of the GC-MS data between what is kept and what is removed of the GC-MS data after filtering according to the selected filtering method.

This provides the user with valuable feedback in an expedient manner of what data is removed and what data is kept after applying the selected filter.

The user may select between different filters and be presented with the associated decision line or plane (i.e. the method loops back before step 204) and can thereby better see the precise effect that a particular filter has on the GC-MS data and better make a sensible choice of filter to use. It is to be understood that in an alternative embodiment, only one predetermined filter may be used whereby step 204 is not necessary.

The available filters may comprise any suitable filters that remove an appropriate part of the GC-MS data while keeping another appropriate part. As examples are e.g. a filter that is based on user input, a filter based on statistical or mathematical analysis (e.g. a filter based on linear discriminant analysis (LDA), non-linear statistical methods, etc.), a 'strict' filter preserving only the GC-MS data being within an area defined by or associated with the true positives (e.g. defined by a derived linear regression line for the true positives), a 'tolerant' filter only excluding the GC-MS data being within an area defined by or associated with the false positives (e.g. defined by a derived linear regression line for the false positives), combinations thereof and/or any other suitable type of filter.

The 'strict' filter only needs the true positives while the 'tolerant' filter only needs the false positives. The 'strict' filter is more 'aggressive' and removes more data than the 'tolerant' filter but may remove some (currently unknown) true positives while the 'tolerant' filter is less 'aggressive' but may leave some (currently unknown) false positives. A filter using statistical or mathematical analysis may use both true and false positives or any one of them. A filter may filter of one or more parameters of the GC-MS data, e.g. like one or more of abundance, purity, Signal to Noise Ratio (SNR), width, amount, models, etc. Some of these filters will be explained in greater detail in connection with the following figures.

A filter to use is chosen by the user, e.g. after having seen the decision line or plane of one or more filters, and the filtering method is carried out on the GC-MS data removing a part of the GC-MS data thereby making a later alignment process (e.g. step 104 in FIG. 1) simpler and faster and also removing noise and unwanted data. By being able to readily select between a number of filters and being shown its corresponding decision line or plane, a user can more readily make a conscious decision about which filter is best to use for a given situation and/or use. Furthermore, it is readily transparent to the user, what effect a given filter has on the data to be filtered.

In an alternative embodiment, the user is not involved in selecting which filter to use, but rather a predetermined filter is used (whereby step 204 is not needed), e.g. a 'strict' or 'tolerant' filter or more preferably a filter based on statistical or mathematical analysis e.g. a filter based on LDE for a more automated process. The user may still be presented with the decision line or plane to know what will happen with the data after filtering but this (step 205) may also be omitted. As another alternative, the user is not displayed any information (whereby steps 202, 203, 204, and potentially step 205 is not needed) and an even more automated process is provided although without user knowledge and involvement.

Further details, variations, and aspects are explained in connection with the other figures.

FIGS. 3a - 3d schematically illustrate an exemplary user interface of one embodiment of the method of filtering at least a part of GC-MS data with different filters selected and their corresponding decision line illustrated. The same obtained or raw GC-MS data is shown and used in these figures.

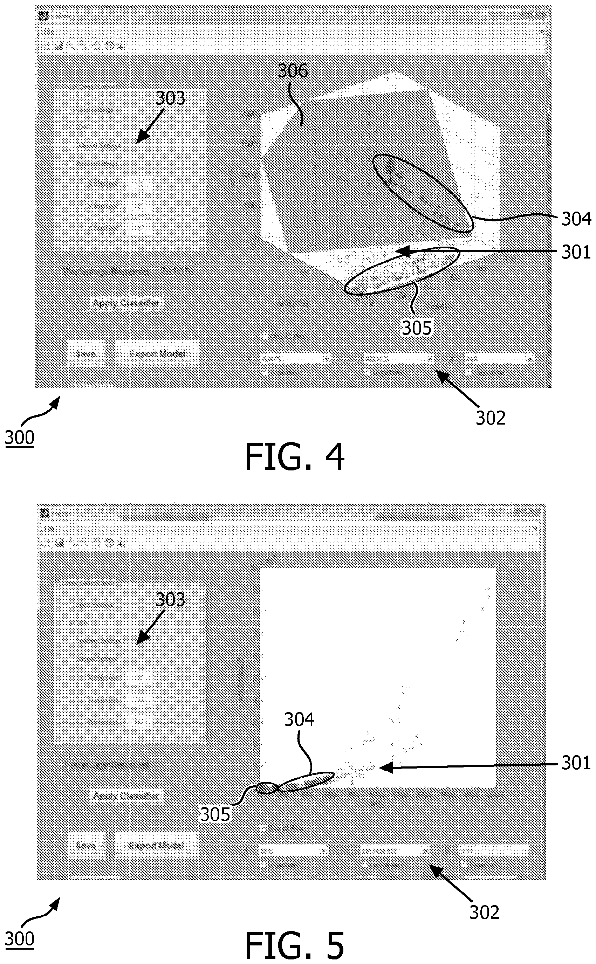

FIG. 3a schematically illustrates an exemplary user interface comprising an area displaying obtained GC-MS data (301) for multiple samples in the form of extracted elution peaks to a user on a suitable display in 2D according to two selected parameters of the multi-dimensional data GC-MS data, in this case 'models' and 'purity'. The multi-dimensional data GC-MS data may also be shown in 3D (according to three selected parameters as e.g. seen in FIG. 4). The parameter 'models' represent the number of ions whose shape matches that of the total ion count (chromatographic peak). The parameter 'purity' represents a percentage of the total ion signal at a given component's maximum intensity scan that belongs to the de-convoluted component, which may be determined by first extracting all of the ions associated with a given component and then summing them to yield the total ion signal of the component.

The user may choose which parameters that the obtained GC-MS data (301) is displayed according to at an appropriate selection area (302).

The obtained GC-MS data (301) is shown together with predetermined data representing one or more elution peaks previously determined to be true positives (304) and predetermined data representing one or elution peaks previously determined to be false positives (305). Please note, that in some embodiments, only one of these types may be displayed.

Further shown, is an area for selecting which filtering method to consider (303). In this particular figure, the user has selected the 'strict' filter and the corresponding decision line (306) is displayed on the GC-MS data (301) so the user readily can see the effect of the filter on the GC-MS data (301) once the filter is applied. The GC-MS data (301) below the decision line (306) is removed during filtering according to the selected filtering method. The decision line (306) may be determined as being perpendicular to a derived linear regression line for - in this case - the true positives (304). Alternatively, other, e.g. non-linear, decision lines may be used.

Also shown, is the amount of data that is removed by applying the filter; in this case 76.9441 % reducing the amount of data significantly and thereby speeding up any later alignment process. It should be noted, since the % of reduction involves some calculation it is in this particular example not updated automatically by selecting a given filter but requires a further action - in this case pressing the button designated 'Apply Classifier'.

FIG. 3b schematically illustrates an exemplary user interface comprising an area displaying obtained GC-MS data (301). The user interface and the data correspond to the ones in FIG. 3a with the exception that another filtering method - and thereby different decision line (306) - has been selected. In this particular figure, the user has selected the 'tolerant' filter. This figure shows that 76.9441 % is removed but that is due to the 'Apply Classifier' button not being selected yet. The data reduction for the 'tolerant' filter will be less.

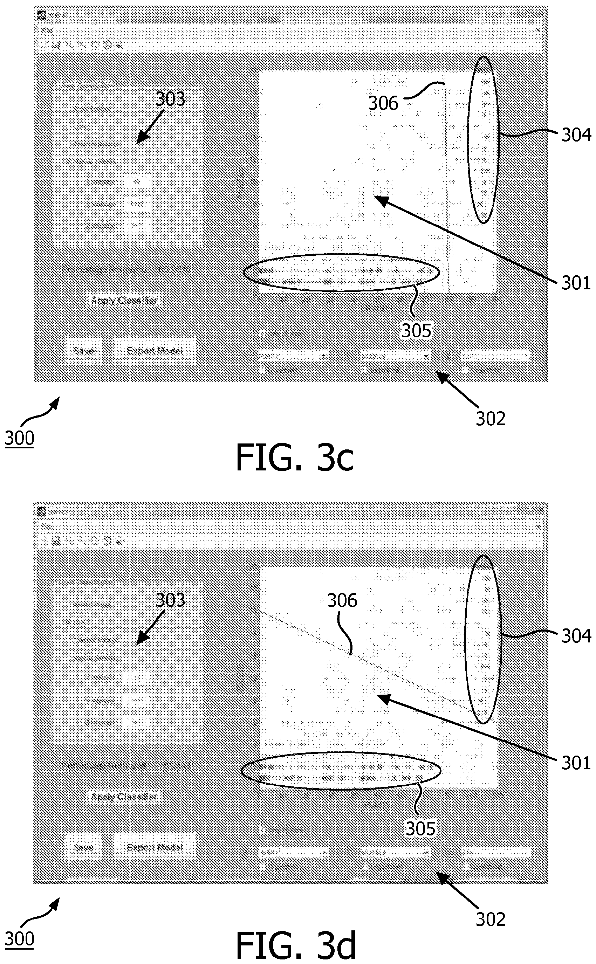

FIG. 3c schematically illustrates an exemplary user interface comprising an area displaying obtained GC-MS data (301). The user interface and the data correspond to the ones in FIGS. 3a and 3b with the exception that another filtering method - and thereby different decision line (306) - has been selected. In this particular figure, the user has selected a 'manual settings' for the filter and has manually supplied a threshold value for each displayed parameter being in this particular example 80 for 'purity' and 1000 for 'models'. A third threshold given for a third (non-displayed) parameter being set to 3^7 but for data displayed in 2D this threshold is not used. In the shown example, all data to the left of the decision line is removed by the filtering and removing 83.9018 % of the data.

FIG. 3d schematically illustrates an exemplary user interface comprising an area displaying obtained GC-MS data (301). The user interface and the data correspond to the ones in FIGS. 3a - 3c with the exception that another filtering method - and thereby different decision line (306) - has been selected. In this particular figure, the user has selected a filter using statistical analysis of the GC-MS data (301), in this specific example LDA. Again, this figure shows that 76.9441 % is removed but that is due to the 'Apply Classifier' button not being selected yet. The data reduction for the LDA filter will be more than for the 'tolerant' filter and less than for the 'strict' filter.

FIG. 4 schematically illustrates the exemplary user interface of FIGS. 3a - 3d showing a 3D representation of the GC-MS data (301). The user interface and the data correspond to the ones in FIGS. 3a to 3c with the exception, the GC-MS data (301) is shown in 3D and that the user has selected another parameter 'SNR' for the third axis. Accordingly, a decision plane (304) is shown instead of a decision line. The parameter 'SNR' represents a total signal-to-noise value as measured by utilizing all ions in a component. Here the LDE filter has been selected now taking into account three dimensions or classes. In the particular shown example, 76.8076 % of the data is removed.

FIG. 5 schematically illustrates the user interface of FIGS. 3a - 3d and 4 displaying GC-MS data according to different parameters than in FIGS. 3a - 3d and 4. In this example, the obtained GC-MS data (301) is displayed according to two selected parameters being 'abundance' and 'SNR'. The parameter 'abundance' represents the total ion count measured in a peak.

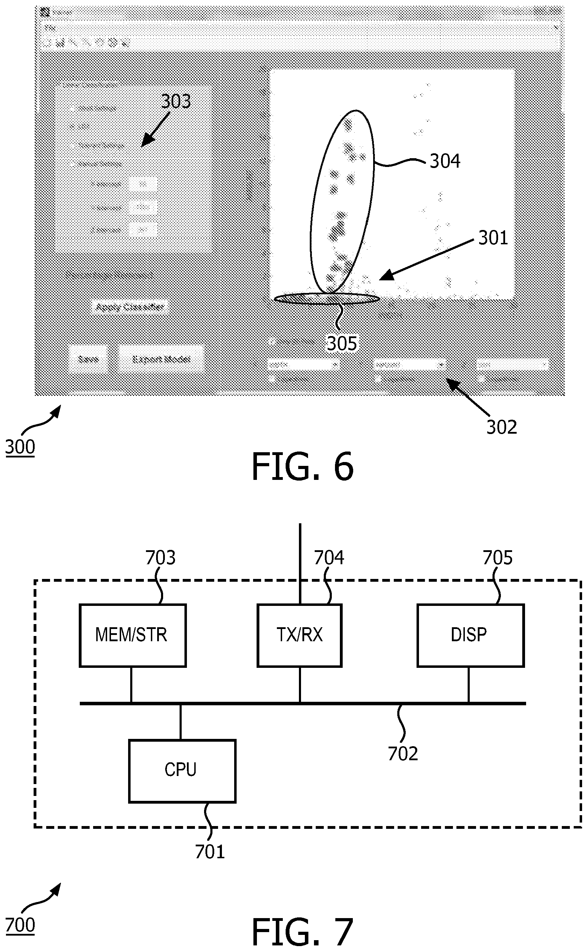

FIG. 6 schematically illustrates the user interface of FIGS. 3a - 3d, 4 and 5 displaying GC-MS data according to other different parameters than in FIGS. 3a - 3d, 4, and 5. In this example, the obtained GC-MS data (301) is displayed according to two selected parameters being 'amount' and 'width'. The parameter 'amount' represents the area of the peak relative to the total ion count for the entire chromatogram, while the parameter 'width' represents a full width at half maximum height of the chromatographic component peak.

In this way, a user may select between different types of filtering and parameters and see the effect on the data that the selected filter will have. Furthermore, as an example, during a research phase, a user may e.g. initially use the more 'tolerant' filter until a greater understanding of the data has been achieved whereby later e.g. a 'strict' or 'manual settings' may be used.

In FIGS. 5 and 6, a decision line is not shown yet as only the GC-MS data (301) and the true and false positives (301; 304; 305) are visualised.

It is to be understood, that the shown user interface is merely one example of a user interface and many other user interface designs could be used with the present invention.

FIG. 7 schematically illustrates one embodiment of a system for filtering at least a part of GC-MS data. The system 700 comprises at least one processing unit 701 connected via one or more communications and/or data buses 702 to a memory and/or storage 703, optional communications elements 704 e.g. for communicating via a network, the Internet, a Wi-Fi connection, and/or the like, and a display 705. The system 700 may be a more or less standard computational system, like a PC, workstation, laptop, tablet, etc. but suitably programmed to carry out the method or procedure as described in the various embodiments throughout the specification and variations thereof thereby achieving the same effects and advantages.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of filtering at least a part of gas chromatography-mass spectrometry data, the method comprising:
- providing gas chromatography-mass spectrometry data (301) for a gas mixture comprising data representing one or more gas chromatography elution peaks obtained for at least one sample, wherein the gas mixture comprises exhaled breath,
- filtering the gas chromatography-mass spectrometry data (301) to reduce the amount of data, wherein the filtering comprises taking into account predetermined data representing one or more elution peaks previously determined to be false positives (305) and/or predetermined data representing one or more elution peaks previously determined to be true positives (304), wherein said predetermined data are stored data that were determined based on earlier analysis for gas mixtures, simpler than the gas mixture for which said data representing one or more gas chromatography elution peaks obtained for at least one sample are provided,
- displaying on a display (705), a representation of a decision line or plane (306), the decision line or plane (306) illustrating a linear or non-linear boundary of the gas chromatography-mass spectrometry data (301) between what is kept and what is removed after filtering, and
- registering a selection made by a user of a filtering method and presenting to the user the decision line or plane (306) associated with the selected filtering method.

2. The method according to claim 1, wherein the method comprises:
- displaying the gas chromatography-mass spectrometry data (301) on a display (705) together with the predetermined data representing one or more elution peaks previously determined to be false positives (305) and/or the predetermined data representing one or more elution peaks previously determined to be true positives (304).

3. The method according to any one of claims 1 - 2, wherein the filtering of the gas chromatography-mass spectrometry data (301) comprises a filtering method selected from the group consisting of:
- filtering the gas chromatography-mass spectrometry data (301) removing data with the condition that all true positives and data associated with the true positives are left after filtering;
- filtering the gas chromatography-mass spectrometry data (301) removing data with the condition that all false positives and data associated with the false positives are removed;
- filtering the gas chromatography-mass spectrometry data (301) using at least two threshold values, each being for a preselected parameter, selected by a user where the filtering discards the gas chromatography-mass spectrometry data (301) being below each threshold value for each associated parameter;
- filtering the gas chromatography-mass spectrometry data (301) based on statistical or mathematical analysis;
- filtering the gas chromatography-mass spectrometry data (301) based on linear discriminant analysis for two or more classes where the predetermined data representing one or more elution peaks previously determined to be false positives (305) belongs to one predetermined class and/or the predetermined data representing one or more elution peaks previously determined to be true positives (304) belongs to a different predetermined class; and
- filtering the gas chromatography-mass spectrometry data (301) based on non-linear statistical analysis for two or more classes where the predetermined data representing one or more elution peaks previously determined to be false positives (305) belongs to one predetermined class and/or the predetermined data representing one or more elution peaks previously determined to be true positives (304) belongs to a different predetermined class.

4. A system (700) for filtering at least a part of gas chromatography-mass spectrometry data, the system comprising:
- a processing unit (701) programmed to filter gas chromatography-mass spectrometry data (301) for a gas mixture to reduce the amount of data, wherein the gas mixture comprises exhaled breath, the gas chromatography-mass spectrometry data (301) comprising data representing one or more gas chromatography elution peaks obtained for at least one sample, wherein the filtering comprises taking into account predetermined data representing one or more elution peaks previously determined to be false positives (305) and/or predetermined data representing one or more elution peaks previously determined to be true positives (304), wherein said predetermined data are stored data that were determined based on earlier analysis for gas mixtures, simpler than the gas mixture for which said data representing one or more gas chromatography elution peaks obtained for at least one sample provided, wherein the system is adapted to:
- display on a display (705), a representation of a decision line or plane (306), the decision line or plane (306) illustrating a linear or non-linear boundary of the gas chromatography-mass spectrometry data (301) between what is kept and what is removed after filtering, and
- register a selection made by a user of a filtering method and present to the user the decision line or plane (306) associated with the selected filtering method.

5. The system according to claim 4, wherein the system is adapted to:
- display the gas chromatography-mass spectrometry data (301) on a display (705) together with the predetermined data representing one or more elution peaks previously determined to be false positives (305) and/or the predetermined data representing one or more elution peaks previously determined to be true positives (304).

6. The system according to any one of claims 4 - 5, wherein the processing unit (701) is adapted to filter the gas chromatography-mass spectrometry data (301) according to a filtering method selected from the group consisting of:
- filtering the gas chromatography-mass spectrometry data (301) removing data with the condition that all true positives and data associated with the true positives are left after filtering;
- filtering the gas chromatography-mass spectrometry data (301) removing data with the condition that all false positives and data associated with the false positives are removed;
- filtering the gas chromatography-mass spectrometry data (301) using at least two threshold values, each being for a preselected parameter, selected by a user where the filtering discards the gas chromatography-mass spectrometry data (301) being below each threshold value for each associated parameter;
- filtering the gas chromatography-mass spectrometry data (301) based on statistical or mathematical analysis;
- filtering the gas chromatography-mass spectrometry data (301) based on linear discriminant analysis for two or more classes where the predetermined data representing one or more elution peaks previously determined to be false positives (305) belongs to one predetermined class and/or the predetermined data representing one or more elution peaks previously determined to be true positives (304) belongs to a different predetermined class; and
- filtering the gas chromatography-mass spectrometry data (301) based on non-linear statistical analysis for two or more classes where the predetermined data representing one or more elution peaks previously determined to be false positives (305) belongs to one predetermined class and/or the predetermined data representing one or more elution peaks previously determined to be true positives (304) belongs to a different predetermined class.

## Patentansprüche

1. Verfahren zum Filtern von mindestens einem Teil von Gaschromatographie-Massenspektrometriedaten, wobei das Verfahren Folgendes umfasst:
- Bereitstellung von Gaschromatographie-Massenspektrometriedaten (301) für ein Gasgemisch, die Daten enthalten, die einen oder mehrere Gaschromatographie-Elutionspeaks darstellen, die für mindestens eine Probe gewonnen wurden, wobei das Gasgemisch ausgeatmeten Atem umfasst,
- Filterung die Gaschromatographie-Massenspektrometriedaten (301), um die Datenmenge zu verringern, wobei das Filtern die Berücksichtigung vorab bestimmter Daten, die einen oder mehrere Elutionspeaks darstellen, die zuvor als falsch positiv bestimmt wurden (305) und/oder vorab bestimmter Daten, die einen oder mehrere Elutionspeaks darstellen, die vorab als richtig positiv (304) bestimmt wurden, umfasst, wobei diese vorab bestimmten Daten gespeicherte Daten sind, die auf Grundlage einer früheren Analyse für Gasgemische bestimmt wurden, die einfacher sind als
das Gasgemisch, für das die
genannten Daten, die einen oder mehrere Gaschromatographie-Elutionspeaks darstellen
für mindestens eine Probe gewonnen wurden bereitgestellt werden,
Anzeige einer Darstellung einer Entscheidungslinie oder -ebene (306) auf einer Anzeige (705), wobei die Entscheidungslinie oder -ebene (306) eine lineare oder nicht lineare Grenze der Gaschromatographie-Massenspektrometriedaten (301) darstellt zwischen dem, was ist nach dem Filtern behalten und was entfernt wird, und,
- Registrieren einer Auswahl, die von einem Benutzer eines Filterverfahrens getroffen wurde und Darstellen der Entscheidungslinie oder -ebene (306), die dem ausgewählten Filterverfahren zugeordnet ist, für den Benutzer.

2. Verfahren nach Anspruch 1, wobei das Verfahren Folgendes umfasst:
- Anzeigen der Gaschromatographie-Massenspektrometriedaten (301) auf einer Anzeige(705) zusammen mit den vorab bestimmten Daten, die einen oder mehrere zuvor als falsch positiv bestimmte Elutionspeaks (305) darstellen, und/oder den vorab bestimmten Daten, die einen oder mehrere zuvor als richtig positiv bestimmte Elutionspeaks (304) darstellen.

3. Verfahren nach einem der Ansprüche 1 bis 2, wobei das Filtern der Gaschromatographie-Massenspektrometriedaten (301) ein Filterverfahren umfasst, das ausgewählt wurde aus einer Gruppe bestehend aus:
- Filterung der Gaschromatographie-Massenspektrometriedaten (301), um Daten zu entfernen mit der Bedingung, dass alle richtig Positiven und Daten, die den richtig Positiven zugeordnet sind, nach dem Filtern übrigbleiben;
- Filterung der Gaschromatographie-Massenspektrometriedaten (301), wobei Daten unter der Bedingung entfernt werden, dass alle falsch Positiven und den falsch Positiven zugeordnete Daten entfernt werden;
- Filterung der Gaschromatographie-Massenspektrometriedaten (301) unter Verwendung von mindestens zwei Schwellenwerten, die jeweils für einen vorab gewählten Parameter stehen, die von einem Benutzer ausgewählt wurden, wobei die Filterung diejenigen Gaschromatographie-Massenspektrometriedaten (301) verwirft, die jeweils unter dem Schwellenwert für den zugeordneten Parameter liegen;
- Filterung der Gaschromatographie-Massenspektrometriedaten (301) auf Grundlage von statistischer oder mathematischer Analyse;
- Filterung der Gaschromatographie-Massenspektrometriedaten (301) auf Grundlage einer linearen Diskriminanzanalyse für zwei oder mehr Klassen, wobei die vorab bestimmten Daten, die einen oder mehrere Elutionspeaks darstellen, die zuvor als falsch positiv bestimmt wurden (305), zu einer vorab bestimmten Klasse gehören und/oder die vorab bestimmten Daten, die einen oder mehrere Elutionspeaks darstellen, die zuvor als echte Positive bestimmt wurden (304), zu einer anderen vorab bestimmten Klasse gehören; und
- Filterung der Gaschromatographie-Massenspektrometriedaten (301) auf Grundlage von linearer statistischer Analyse für zwei oder mehr Klassen, wobei die vorab bestimmten Daten, die einen oder mehrere Elutionspeaks darstellen, die zuvor als falsch positiv bestimmt wurden (305), zu einer vorab bestimmte Klasse gehören und/oder die vorab bestimmten Daten, die einen oder mehrere Elutionspeaks darstellen, die zuvor als echte Positive (304) bestimmt wurden, zu einer anderen vorab bestimmten Klasse gehören.

4. System (700) zur Filterung von mindestens einem Teil der Gaschromatographie-Massenspektrometriedaten, wobei das System Folgendes umfasst:
- eine Verarbeitungseinheit (701), die dazu programmiert ist, Gaschromatographie-Massenspektrometriedaten (301) für ein Gasgemisch zum Reduzieren der Datenmenge zu filtern, wobei das Gasgemisch ausgeatmeten Atem umfasst, wobei die Gaschromatographie-Massenspektrometriedaten (301) Daten umfassen, die einen oder mehrere Gaschromatographie-Elutionspeaks darstellen, die für mindestens eine Probe gewonnen wurden, wobei das Filtern das Berücksichtigen vorab bestimmter Daten umfasst, die einen oder mehreren Elutionspeaks darstellen, die zuvor als falsch positiv bestimmt wurden (305), und/oder vorbestimmter Daten, die einen oder mehrere Elutionspeaks darstellen, die zuvor als richtig positiv (304)bestimmt wurde, wobei diese vorab bestimmten Daten
gespeicherte Daten sind, die bestimmt wurden auf Grundlage einer früheren Analyse für Gasgemische, die einfacher sind als
das Gasgemisch, für das die
genannten Daten, die einen oder mehrere Gaschromatographie-Elutionspeaks darstellen,
für mindestens eine Probe gewonnen wurde, bereitgestellt werden, wobei das System dazu ausgelegt ist, auf einer
- Anzeige (705) eine Darstellung einer Entscheidungslinie oder -ebene (306) anzuzeigen,
wobei die Entscheidungslinie oder -ebene (306) eine lineare oder nichtlineare Grenze der Gaschromatographie-Massenspektrometriedaten (301) zwischen dem, was nach dem Filtern behalten wird, und dem, was entfernt wird, darstellt, und
- Registrieren einer Auswahl, die von einem Benutzer eines Filterverfahrens getroffen wurde, und Darstellen der Entscheidungslinie oder -ebene (306), die dem ausgewählten Filterverfahren zugeordnet ist, für den Benutzer.

5. System nach Anspruch 4, wobei das System für Folgendes ausgelegt ist:
- Anzeige der Gaschromatographie-Massenspektrometriedaten (301) auf einer Anzeige (705) zusammen mit den vorbestimmten Daten, die einen oder mehrere Elutionspeaks darstellen, die zuvor als falsch positiv bestimmt wurden (305), und/oder den vorbestimmten Daten, die einen oder mehrere Elutionspeaks darstellen, die zuvor als richtige Positive bestimmt wurden (304) .

6. System nach einem der Ansprüche 4 bis 5, wobei die Verarbeitungseinheit (701) dazu ausgelegt ist, die Gaschromatographie-Massenspektrometriedaten (301) zu filtern nach einem Filterverfahren,
das ausgewählt wird aus der Gruppe bestehend aus:
- Filtern der Gaschromatographie-Massenspektrometriedaten (301), wobei Daten unter der Bedingung entfernt werden, dass nach dem Filtern alle richtigen Positiven und den richtigen Positiven zugeordneten Daten übrigbleiben;
- Filterung der Gaschromatographie-Massenspektrometriedaten (301), um Daten zu entfernen mit der Bedingung, dass alle falsch Positiven und den falsch Positiven zugeordnete Daten entfernt werden;
- Filtern der Gaschromatographie-Massenspektrometriedaten (301) unter Verwendung von mindestens zwei Schwellenwerten, die jeweils für einen vorab gewählten Parameter bestimmt werden, der von einem Benutzer ausgewählt wird, wobei die
- Filterung diejenigen Gaschromatographie-Massenspektrometriedaten (301) verwirft, die jeweils unter dem Schwellenwert für jeden zugeordneten Parameter liegen;
- Filtern der Gaschromatographie-Massenspektrometriedaten (301) auf Grundlage von statistischer oder mathematischer Analyse;
- Filterung der Gaschromatographie-Massenspektrometriedaten (301) auf Grundlage einer linearen Diskriminanzanalyse für zwei oder mehr Klassen, wobei die vorab bestimmten Daten, die einen oder mehrere Elutionspeaks darstellen, die zuvor als falsch positiv bestimmt wurden (305), zu einer vorbestimmten Klasse gehören und/oder die vorab bestimmten Daten einen oder mehrere Elutionspeaks darstellen, die zuvor als richtige Positive (304) bestimmt wurden, zu einer anderen vorab bestimmten Klasse gehören.
Und
- Filterung der Gaschromatographie-Massenspektrometriedaten (301) basierend auf einer nichtlinearen statistischen Analyse für zwei oder mehr Klassen, wobei die vorab bestimmten Daten, die einen oder mehrere Elutionspeaks darstellen, die zuvor als falsch positiv bestimmt wurden (305), zu einer vorbestimmten Klasse gehören und/oder die vorab bestimmten Daten einen oder mehrere Elutionspeaks darstellen, die zuvor als richtige Positive (304) bestimmt wurden, zu einer anderen vorab bestimmten Klasse gehören.

## Revendications

1. Procédé de filtrage d'au moins une partie des données de chromatographie en phase gazeuse couplée à une spectrométrie de masse, ledit procédé comprenant :
- la fourniture des données de chromatographie en phase gazeuse couplée à une spectrométrie de masse (301) pour un mélange gazeux comprenant des données représentant un ou plusieurs pics d'élution de chromatographie en phase gazeuse obtenus pour au moins un échantillon, dans lequel le mélange gazeux comprend une haleine exhalée ;
- le filtrage des données de chromatographie en phase gazeuse couplée à une spectrométrie de masse (301) pour réduire la quantité de données, dans lequel ledit filtrage comprend la prise en compte des données prédéterminées représentant un ou plusieurs pics d'élution précédemment déterminés comme faux positifs (305) et/ou des données prédéterminées représentant un ou plusieurs pics d'élution précédemment déterminés comme vrais positifs (304),
dans lequel lesdites données prédéterminées
sont
des données mémorisées, lesquelles ont été déterminées sur la base d'une analyse antérieure pour des mélanges gazeux plus simples que le mélange gazeux pour lequel lesdites données représentant un ou plusieurs pics d'élution de chromatographie en phase gazeuse
obtenus pour au moins un échantillon sont fournies ;
- l'affichage sur un écran (705), d'une représentation d'une ligne ou d'un plan de décision (306), ladite ligne ou ledit plan de décision (306) illustrant une frontière linéaire ou non linéaire de données de chromatographie en phase gazeuse couplée à une spectrométrie de masse (301) entre les données conservées et les données supprimées après le filtrage ; et
- l'enregistrement d'une sélection effectuée par un utilisateur d'un procédé de filtrage et la présentation à l'utilisateur de la ligne ou du plan de décision (306) associé au procédé de filtrage sélectionné.

2. Procédé selon la revendication 1, dans lequel ledit procédé comprend :
- l'affichage des données de chromatographie en phase gazeuse couplée à une spectrométrie de masse (301) sur un écran (705) comportant les données prédéterminées représentant un ou plusieurs pics d'élution précédemment déterminés comme faux positifs (305) et/ou les données prédéterminées représentant un ou plusieurs pics d'élution précédemment déterminés comme vrais positifs (304).

3. Procédé selon l'une quelconque des revendications 1 à 2, dans lequel le filtrage des données de chromatographie en phase gazeuse couplée à une spectrométrie de masse (301) comprend un procédé de filtrage choisi dans le groupe constitué par :
- le filtrage des données de chromatographie en phase gazeuse couplée à une spectrométrie de masse (301) supprimant les données à la condition que tous les vrais positifs et les données associées aux vrais positifs soient laissés après le filtrage ;
- le filtrage des données de chromatographie en phase gazeuse couplée à une spectrométrie de masse (301) supprimant les données à condition que tous les faux positifs et les données associées aux faux positifs soient supprimés ;
- le filtrage des données de chromatographie en phase gazeuse couplée à une spectrométrie de masse (301) utilisant au moins deux valeurs seuil, la valeur seuil respective étant pour un paramètre présélectionné, sélectionné par un utilisateur, où le filtrage rejette les données de chromatographie en phase gazeuse couplée à une spectrométrie de masse (301) étant inférieures à la valeur seuil respective pour le paramètre associé respectif ;
- le filtrage des données de chromatographie en phase gazeuse couplée à une spectrométrie de masse (301) sur la base d'une analyse statistique ou mathématique ;
- le filtrage des données de chromatographie en phase gazeuse couplée à une spectrométrie de masse (301) sur la base d'une analyse discriminante linéaire pour au moins deux classes où les données prédéterminées représentant un ou plusieurs pics d'élution précédemment déterminés comme faux positifs (305) appartiennent à une classe prédéterminée et/ou les données représentant un ou plusieurs pics d'élution précédemment déterminés comme vrais positifs (304) appartiennent à une classe prédéterminée différente ; et
- le filtrage des données de chromatographie en phase gazeuse couplée à une spectrométrie de masse (301) sur la base d'une analyse statistique non linéaire pour au moins deux classes où les données prédéterminées représentant un ou plusieurs pics d'élution précédemment déterminés comme faux positifs (305) appartiennent à une classe prédéterminée et/ou les données prédéterminées représentant un ou plusieurs pics d'élution précédemment déterminés comme vrais positifs (304) appartiennent à une classe prédéterminée différente.

4. Système (700) de filtrage d'au moins une partie des données de chromatographie en phase gazeuse couplée à une spectrométrie de masse, ledit système comprenant :
- une unité de traitement (701) programmée pour filtrer les données de chromatographie en phase gazeuse couplée à une spectrométrie de masse (301) pour un mélange gazeux pour réduire la quantité de données, dans lequel le mélange gazeux comprend une haleine exhalée, les données de chromatographie en phase gazeuse couplée à une spectrométrie de masse (301) comprenant des données représentant un ou plusieurs pics d'élution de chromatographie en phase gazeuse obtenus pour au moins un échantillon, dans lequel le filtrage comprend la prise en compte des données prédéterminées représentant un ou plusieurs pics d'élution précédemment déterminés comme faux positifs (305) et/ou des données prédéterminées représentant un ou plusieurs pics d'élution précédemment déterminés comme vrais positifs (304), dans lequel lesdites données prédéterminées
sont des données mémorisées,
lesquelles ont été déterminées sur la base d'une analyse antérieure pour mélanges gazeux plus simples que le mélange gazeux pour lequel lesdites données représentant un ou plusieurs pics d'élution de chromatographie en phase gazeuse obtenus pour au moins un échantillon sont fournies, dans lequel ledit système est conçu :
- pour afficher sur un écran (705), une représentation d'une ligne ou d'un plan de décision (306), ladite ligne ou ledit plan de décision (306) illustrant une frontière linéaire ou non linéaire des données de chromatographie en phase gazeuse couplée à une spectrométrie de masse (301) entre les données conservées et les données supprimées après le filtrage ; et
- pour enregistrer une sélection effectuée par un utilisateur d'un procédé de filtrage et pour présenter à l'utilisateur la ligne ou le plan de décision (306) associé au procédé de filtrage sélectionné.

5. Système selon la revendication 4, dans lequel ledit système est conçu pour :
- afficher les données de chromatographie en phase gazeuse couplée à une spectrométrie de masse (301) sur un écran (705) comportant les données prédéterminées représentant un ou plusieurs pics d'élution précédemment déterminés comme faux positifs (305) et/ou les données prédéterminées représentant un ou plusieurs pics d'élution précédemment déterminés comme vrais positifs (304).

6. Système selon l'une quelconque des revendications 4 à 5, dans lequel l'unité de traitement (701) est conçue pour filtrer
les données de chromatographie en phase gazeuse couplée à une spectrométrie de masse (301) selon un procédé de filtrage choisi dans le groupe constitué par :
- le filtrage des données de chromatographie en phase gazeuse couplée à une spectrométrie de masse (301) supprimant les données à la condition que tous les vrais positifs et les données associées aux vrais positifs soient laissés après le filtrage ;
- le filtrage des données de chromatographie en phase gazeuse couplée à une spectrométrie de masse (301) supprimant les données à la condition que tous les vrais positifs et les données associées aux vrais positifs soient laissés après le filtrage ;
- le filtrage des données de chromatographie en phase gazeuse couplée à une spectrométrie de masse (301) utilisant au moins deux valeurs seuil, la valeur seuil respective étant pour un paramètre présélectionné, sélectionné par un utilisateur, où le filtrage rejette les données de chromatographie en phase gazeuse couplée à une spectrométrie de masse (301) étant inférieures à la valeur seuil pour le paramètre associé respectif ;
- le filtrage des données de chromatographie en phase gazeuse couplée à une spectrométrie de masse (301) sur la base d'une analyse statistique ou mathématique ;
- le filtrage des données de chromatographie en phase gazeuse couplée à une spectrométrie de masse (301) sur la base d'une analyse discriminante linéaire pour au moins deux classes où les données prédéterminées représentant un ou plusieurs pics d'élution précédemment déterminés comme faux positifs (305) appartiennent à une classe prédéterminée et/ou les données représentant un ou plusieurs pics d'élution précédemment déterminés comme vrais positifs (304) appartiennent à une classe prédéterminée différente ;
et
- le filtrage des données de chromatographie en phase gazeuse couplée à une spectrométrie de masse (301) sur la base d'une analyse statistique non linéaire pour au moins deux classes où les données prédéterminées représentant un ou plusieurs pics d'élution précédemment déterminés comme faux positifs (305) appartiennent à une classe prédéterminée et/ou les données prédéterminées représentant un ou plusieurs pics d'élution précédemment déterminés comme vrais positifs (304) appartiennent à une classe prédéterminée différente.
